# EUROPÄISCHE PATENTSCHRIFT

(11) **EP 3 403 789 B1**
(45) Veröffentlichungstag und Bekanntmachung des Hinweises auf die Patenterteilung: **07.10.2020**
(21) Anmeldenummer: 18172879.1
(22) Anmeldetag: 17.05.2018
(51) Int. Cl.: B27G 13/08, B23C 5/08, B27G 13/10

(54) **FRÄSWERKZEUG MIT EINEM SCHEIBENFÖRMIGEN GRUNDKÖRPER**
MILLING CUTTER TOOL WITH A DISC-SHAPED BASE BODY
OUTIL DE FRAISAGE POURVU D'UN CORPS DE BASE EN FORME DE DISQUE

(30) Priorität: 18.05.2017 DE 102017110879
(43) Veröffentlichungstag der Anmeldung: 21.11.2018
(73) Patentinhaber: Leitz GmbH & Co. KG, 73447 Oberkochen (DE)
(72) Erfinder: KISSELBACH, Andreas, 73431 Aalen (DE); BECK, Peter, 73447 Oberkochen (DE); UHL, Ansgar, 73485 Unterschneidheim (DE); MÜLLER, Werner, 73441 Bopfingen (DE)
(74) Vertreter: Gramm, Lins & Partner Patent- und Rechtsanwälte PartGmbB

(56) Entgegenhaltungen:
- EP-A1- 0 941 822
- EP-A1- 3 173 200
- WO-A1-89/00097
- DE-A1-102013 004 394
- DE-A1-102015 213 585
- DE-A1-102016 104 777
- FR-A1- 2 635 478
- FR-A1- 2 892 650
- JP-A- H10 278 006
- US-A- 994 457
- US-A- 5 595 226

## Beschreibung

Die Erfindung betrifft ein Fräswerkzeug gemäß dem Oberbegriff des Anspruchs 1. Ein solches Fräswerkzeug wird aus dem Dokument DE 10 2016 104 777 A1 bekannt.

An der Schaftseite kann ein Schaft ausgebildet sein, um das Fräswerkzeug in ein Futter der Werkzeugmaschine einspannen zu können oder die Schaftseite kann so ausgebildet sein, dass an ihr ein Schaft befestigt werden kann.

Ein solches Fräswerkzeug wird beispielsweise dazu verwendet, um in einem Werkstück kreisbogenförmige T-Profil-Einfräsungen zu erzeugen, in die das von der Lamello AG in CH-4416 Bubendorf, Schweiz, unter der Bezeichnung "Clamex P" vertriebene Verbindungssystem für plattenförmige Bauteile, zum Beispiel Korpusmöbel, eingesetzt werden kann. Das System besteht aus kreissegmentartigen Verbindungselementen, die umfangsseitig ein umlaufendes T-Profil aufweisen und in ein entsprechendes Negativprofil im Werkstück eingesetzt werden. Das Negativprofil im Werkstück wird durch einen T-Nutenfräser erzeugt, der denselben Radius besitzt wie das Verbindungselement. Das Profil des T-Nutenfräsers entspricht in etwa dem T-Profil des Verbindungselementes, jedoch ist seine Breite etwas geringer. Zum Erzeugen der kreisbogenförmigen T-Profil-Einfräsung im Werkstück taucht der T-Nutenfräser radial bis auf die erforderliche Tiefe in das Werkstück ein, wird dann in dieser Position axial in beide Richtungen (rechts und links bzw. oben und unten) bewegt, um die T-förmige Hinterschneidung zu erzeugen, fährt anschließend wieder in die Mittenposition zurück und wird aus dem Werkstück herausgezogen.

Um die T-Profil-Einfräsung erzeugen zu können, müssen die Werkstücke zuvor auf ihre Endkontur bearbeitet worden sein.

Eine moderne Methode zum Zuschneiden von Plattenwerkstücken ist das sogenannte "Nesting-Verfahren". Bei diesem Verfahren erfolgt der Zuschnitt einzelner Werkstücke aus einer großformatigen Platte durch eine Fräsbearbeitung mit einem Schaftfräser anstatt durch Sägen mit einem Kreissägeblatt. Hierzu werden die einzelnen Zuschnitte verschnittoptimiert in der großformatigen Platte verschachtelt und dann mittels des Schaftfräsers herausgeschnitten. Die großformatige Platte wird dabei auf einer luftdurchlässigen Maschinenauflage (MDF-Platte) durch Vakuum gehalten. Beim Zuschneiden der Werkstücke zerspant der Schaftfräser auch einen Teil der MDF-Platte.

Zusätzlich zum reinen Zuschnitt der Werkstücke können auf einer Nesting-Maschine auch Bohrungen für Dübel und Verbindungs-Beschläge gesetzt werden. Damit ist eine Komplettbearbeitung in einer Aufspannung möglich.

Wenn die T-förmigen "Clamex-P"-Verbinder eingesetzt werden, ist eine Bearbeitung auf einer separaten Maschine mit zusätzlichem Teile-Handling erforderlich, weil die Bauteile auf der Nesting-Maschine zu eng nebeneinander liegen und eine seitliche Bearbeitung der Werkstückkanten mit dem beschriebenen T-Nutenfräser, der einen Durchmesser von ca. 100 mm aufweist, nicht möglich ist. Wenn der Abstand zwischen zwei genesteten Werkstücken größer wäre als der Durchmesser des Nutenfräsers und dadurch der T-Nutenfräser zwischen zwei genesteten Werkstücken Platz hat, müsste das gesamte Material in diesem breiten Zwischenraum zerspant werden, bevor der T-Nutenfräser zum Einsatz kommen kann, wodurch ein entsprechend starker Verschleiß an den Schneiden des Aufteilwerkzeuges entsteht, sodass die Standzeit des Werkzeugs reduziert ist und die Produktionskosten entsprechend hoch sind. Aus der US 5,595,226 A1 ist ein Fräswerkzeug bekannt, mit dem eine kreisförmige Ausfräsung in eine Metallplatte eingebracht wird, die in einen Schlitz übergeht, dessen Breite kleiner ist als der Durchmesser der Ausfräsung.

Die EP 3 173 200 A1 offenbart ein tragbares Fräswerkzeug mit dem in eine Platte eine T-förmige Nut eingefräst werden kann.

Die DE 10 2015 213 585 A1 beschreibt ein Verfahren und eine Vorrichtung zum Ausbilden von Aussparungen in einzelnen Möbelbauteilen. In diese Aussparungen können Verbindungselemente zum Verbinden verschiedener Möbelteile eingesetzt werden.

Aus der US 949,457 A ist ein Holzbohrer bekannt, dessen Durchmesser variabel ist. Die nachveröffentlichte DE 10 2016 104 777 A1 beschreibt ein Holzbearbeitungswerkzeug, mit dem in die Seitenkanten eines Werkstücks bogenförmige Ausnehmungen eingefräst werden können, die taschenförmig ausgestaltet sind. Mit diesem Werkzeug können keine T-Nuten gefräst werden.

Hiervon ausgehend liegt der Erfindung die Aufgabe zugrunde, das eingangs beschriebene Fräswerkzeug so zu verbessern, dass die T-Nuten in die Seitenkanten der genesteten Werkstücke eingebracht werden können, während diese auf der Maschinenauflage der Nesting-Maschine gespannt sind.

Zur Problemlösung zeichnet sich ein gattungsgemäßes Fräswerkzeug dadurch aus, dass die Stirnseite vom Zentrum bis zum äußeren Umfang in axialer Richtung schneidend ausgebildet ist und die Stirnseite eine Mehrzahl von Schneiden aufweist, die erfindungsgemäß mindestens zwei Bereiche aufgeteilt sind, wobei der erste Bereich zentrumsnah und der zweite Bereich umfangsnah angeordnet ist, und die mindestens eine Schneide im zentrumsnahen Bereich vom Zentrum ausgehend in einem Winkel und die mindestens eine Schneide im umfangsnahen Bereich planparallel zu einer Radialebene des Grundkörpers verlaufen.

Durch diese Ausgestaltung kann das Fräswerkzeug axial an der Stelle auf die großformatige Platte aufgesetzt werden, an der die Nut in die Seitenkante des Werkstücks eingesetzt wird. Es fräst dann den Werkstoff an dieser Stelle axial ab. Ist die ausreichende Tiefe erreicht, wird das Werkzeug in radialer Richtung in den Kern der Platte verfahren, und dann in axialer Richtung auf und ab bewegt, in die Nut zurückgeführt und dann in radialer Richtung aus dem Plattenkern herausgefahren und axial nach oben aus der großformatigen Platte abgehoben. Außerdem

wird bei der Bearbeitung durch die mindestens eine Schneide im zentrumsnahen Bereich eine kegelförmige Kalotte erzeugt, sodass sich das Fräswerkzeug beim Einbohren in die Platte zentriert und die Spanbildung nicht schlagartig auf der gesamten Stirnseite einsetzt, sondern kontinuierlich von innen nach außen erfolgt. Auf diese Weise wird ein gleichmäßiger Kräfteanstieg und somit ein ruhiger und präziser Lauf des Werkzeuges erreicht.

In einer bevorzugten Werkzeugausführung mit einem Außendurchmesser von 100,4 mm nimmt der kegelförmig schneidende zentrumsnahe Bereich einen Durchmesser bis maximal 58 mm, vorzugsweise 56 mm ein.

An der Stirnseite ist das erfindungsgemäße Fräswerkzeug von seinem Zentrum bis zum äußeren Umfang durchgehend mit Schneiden versehen, die einen axialen Freiwinkel aufweisen, damit es axial einbohren kann. Die mindestens eine Schneide im umfangsnahen Bereich schließt sich bis an die Profilschneide an.

Der axiale Überstand der Profilschneide vom Grundkörper kann zur Stirnseite und zur Schaftseite gleich groß (vorzugsweise 1,5 mm) oder zur Stirnseite größer sein.

Damit der Grundkörper des Fräswerkzeuges bei dem Zerspanungsprozess nicht kollidieren kann, ist bevorzugt der sich an die umfangsseitige Profilschneide nach radial innen anschließende Teil des Grundkörpers gegenüber der umfangsseitigen Profilschneide beidseitig axial zurückgesetzt, was durch den axialen Überstand der Profilschneide erreicht wird. Diese Zurücksetzung muss mindestens so groß sein wie die axiale Oszillationsbewegung bei der Erzeugung der T-Nut und muss sich radial mindestens über den Bereich der Einfrästiefe für das Verbindungselement erstrecken. Der im Zentrum liegende Teil der im Winkel verlaufenden Schneiden steht vorzugsweise in axialer Richtung über die Stirnseite weiter hervor als die Profilschneide.

Vorzugsweise sind eine Mehrzahl zentrumsnaher Schneiden und eine Mehrzahl umfangsnaher Schneiden vorgesehen.

Der Kegelwinkel, der von der schräg verlaufenden Schneide erzeugt wird, ist stumpf und schließt insbesondere einen Winkel von 170° ein.

Zur Erhöhung der Stabilität, insbesondere gegenüber den Einbohrkräften, kann ein Konturübergang vom Werkzeuggrundkörper auf der Schaftseite zum Zentrum hin vorzugsweise kontinuierlich ausgebildet werden. Diese Ausbildung kann radius- oder kegelförmig gestaltet sein.

Vor den Schneiden im zentrumsnahen Bereich sind im Grundkörper vorzugsweise Durchbrüche vorgesehen, die eine Abführung der Späne von der Bearbeitungsseite in Richtung der Schaftseite ermöglichen. Mit diesen Durchbrüchen werden also Spanräume geschaffen. Für die radiale Fräsbewegung sind die Spanräume der radial äußeren Schneiden, insbesondere der Profilschneiden, umfangsseitig geöffnet. Die Spanräume der radial inneren Schneiden sind aus Stabilitätsgründen vorzugsweise durch den Grundkörper axial verlaufend ausgebildet.

Die Schneiden im zentrumsnahen Bereich sind vorzugsweise an Wechselmessern ausgebildet. Als Schneidstoff kommt ein hochharter Werkstoff in Frage, wie beispielsweise Hartmetall, Keramik, Diamant. Die Schneiden können zusätzlich oder alternativ mit einer hochharten Verschleißschutzbeschichtung (Metallnitride, Metallcarbide, Metalloxide, Diamant oder diamant-ähnlicher Kohlenstoff) versehen sein.

Da der Wirkweg der Schneiden und damit auch der Verschleiß vom Zentrum hin zunimmt, ist es vorteilhaft, die radial äußeren Schneidenbereiche und hier insbesondere die Profilschneide mit einem verschleißbeständigeren Schneidstoff (zum Beispiel polykristalliner Diamant) auszubilden als die radial inneren Schneiden, die zum Beispiel aus Hartmetall bestehen. Da die Bearbeitung von Hartmetall und polykristallinem Diamant mit unterschiedlichen Verfahren erfolgt (Schleifen/Erodieren), kann es vorteilhaft sein, wenn unterschiedliche Schneidstoffe verwendet werden, mindestens eine Schneidstoffart als Wechselmesser vorzusehen. Auf diese Weise kann jeder Schneidstoff separat unter optimalen Bedingungen bearbeitet werden. Damit ist zu vermeiden, dass die Bearbeitung der Schneiden zum Schärfen und Abrichten entweder auf einer teuren Spezialmaschine erfolgen muss oder nacheinander auf zwei separaten Maschinen durchgeführt wird, was ein Umspannen des Werkzeugs erfordern würde und damit das Schärfen des Werkzeugs verteuert.

Mit Hilfe einer Zeichnung soll ein Ausführungsbeispiel der Erfindung nachfolgend näher beschrieben werden. Es zeigen:

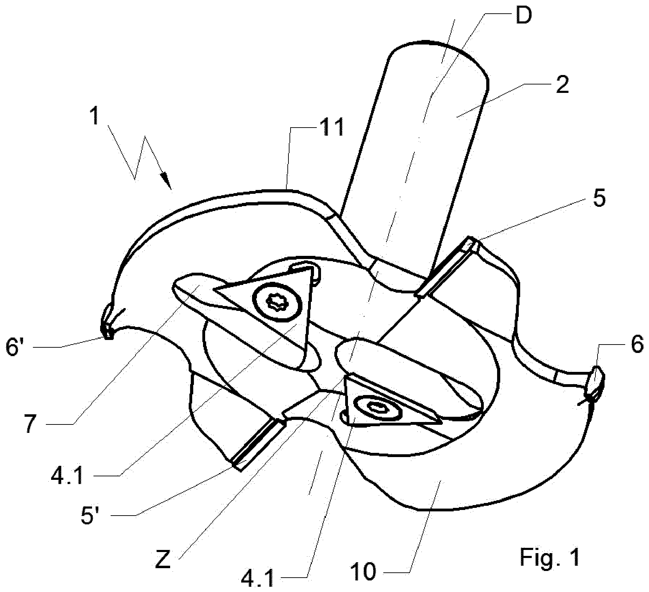

- Figur 1 -: eine perspektivische Darstellung des Fräswerkzeuges;

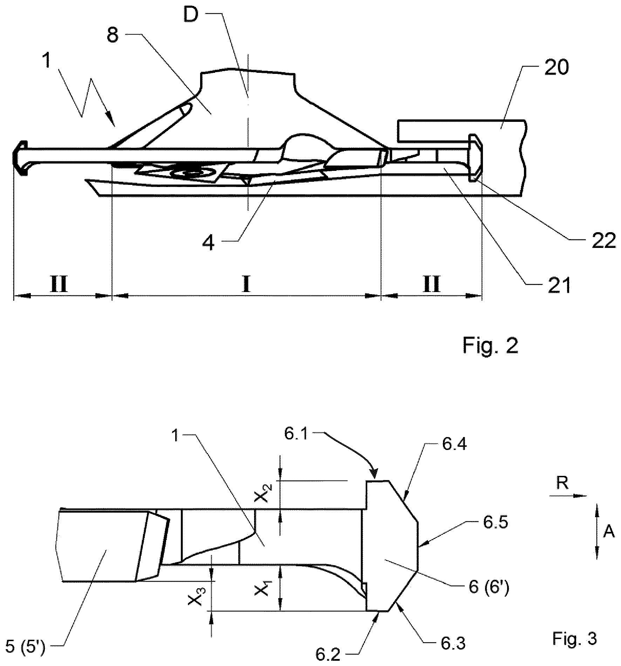

- Figur 2 -: die Seitenansicht des Werkzeugs im Eingriff im Werkstück;
- Figur 3 -: eine Teildarstellung des Werkzeugs im Bereich der Umfangsschneide;
- Figur 4 -: die stirnseitige Ansicht des Werkzeugs;

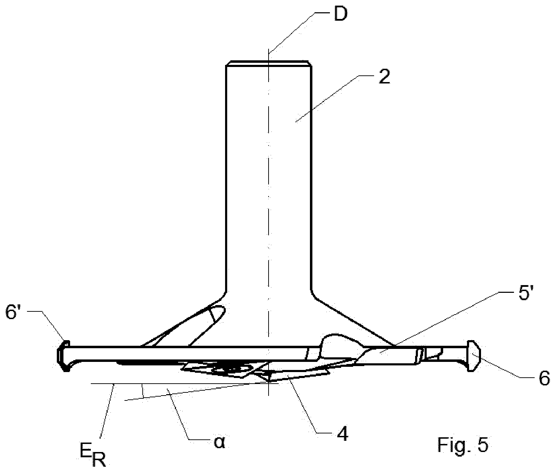

- Figur 5 -: die umfangsseitige Ansicht des Werkzeugs;
- Figur 6 -: eine Prinzipskizze der Funktionsweise und des Prozessablaufs.

Das Fräswerkzeug weist einen scheibenförmigen Grundkörper 1 mit einem an der Schaftseite 11 angebrachten Schaft 2 auf. Über den Schaft 2 erfolgt der Antrieb des Werkzeugs um die Drehachse D. Auf der der Schaftseite 11 gegenüberliegenden Stirnseite 10 sind in Axialrichtung A wirkende Schneiden 4, 4', 5, 5' vorgesehen. Radial außen sind am Grundkörper 1 im Querschnitt trapezförmige Profilschneiden 6, 6' vorgesehen, die sowohl in beiden axialen Richtungen A schneidende Schneidkanten 6.1, 6.2 als auch in einer radialen Richtung R schneidende Schneidkanten 6.3, 6.4, 6.5 aufweisen.

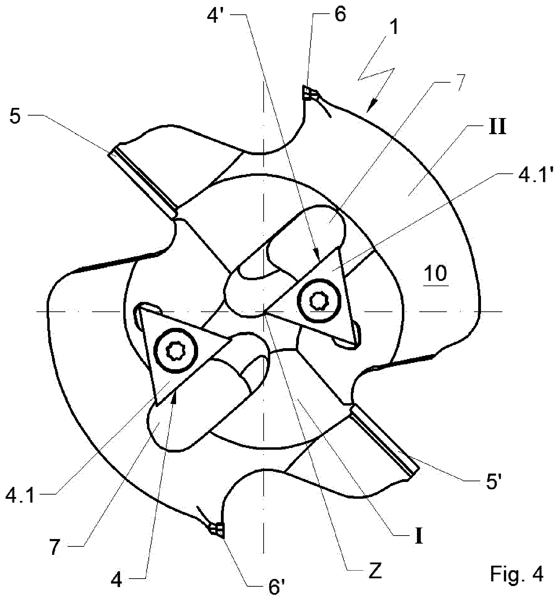

Aus Figur 4 ist ersichtlich, dass die Stirnseite 10 in einen zentrumsnahen Bereich I und in einen umfangsnahen Bereich II aufgeteilt ist und ausgehend vom Zentrum Z im zentrumsnahen Bereich I zwei Schneiden 4, 4' vorgesehen sind, die als Wechselmesser 4.1 ausgebildet sind. Im umfangsnahen Bereich II sind diametral Schneiden 5, 5' vorgesehen. Die im zentrumsnahen Bereich I angeordneten Schneiden 4, 4' verlaufen in einem Winkel α zu einer Radialebene E_{R} des Grundkörpers 1 und die im umfangsnahen Bereich II vorgesehenen Schneiden 5, 5' planparallel zu dieser Radialebene E_{R}. Durch die Anordnung der Schneiden 4, 4' im Winkel α wird im Werkstück 40 eine kegelförmige Kalotte in axialer Richtung A erzeugt, über die das Fräswerkzeug auf der Oberseite des Werkstücks 40 zu Beginn des Fräsvorganges zentriert wird. Über Durchbrechungen 7 im Grundkörper 1 vor den Schneiden 4, 4' werden Spanräume geschaffen, über die Späne zur Schaftseite 11 hin abgeführt werden können.

Zur Erhöhung der Stabilität des Fräswerkzeugs, insbesondere gegenüber den Einbohrkräften, ist der Grundkörper auf der Schaftseite 11 durch einen Kegel 8 verdickt, der etwa den zentrumsnahen Bereich I überdeckt.

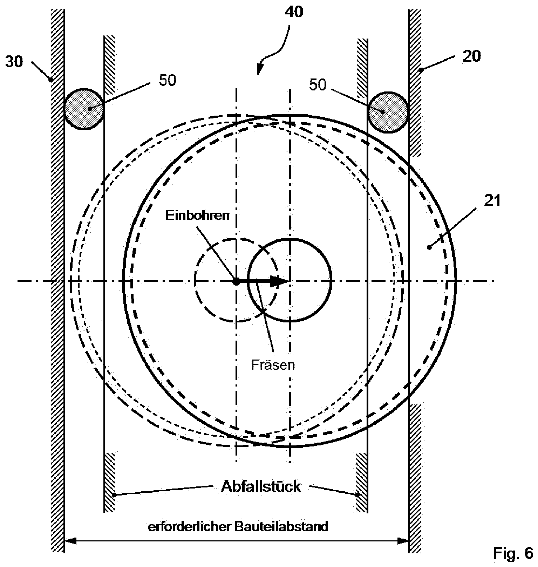

Anhand von Figur 6 wird in zwei Arbeitsstellungen die Funktionsweise des Werkzeuges näher erläutert:
Auf der großformatigen Platte 40 sind parallel beabstandet zwei Werkstücke 20, 30 genestet, die später über die Aufteilwerkzeuge 50 aus der großformatigen Platte 40 herausgetrennt werden. In die Seitenkante des Werkstücks 20 soll eine bogenförmige Nut 21, die sich an ihrem Ende zu einer T-förmigen Nut 22 erweitert, herausgefräst werden. Der Abstand zwischen den genesteten Werkstücken 20, 30 ist geringfügig größer als der Außendurchmesser des Werkzeugs, der durch die Profilschneiden 6, 6' bestimmt wird. Mit seinem Zentrum Z wird das Werkzeug auf die mit "Einbohren" gekennzeichnete Stelle aufgesetzt und in axialer Richtung A in die Holzwerkstoffplatte 40 eingeführt, sodass dabei durch die Schneiden 4, 4' eine kegelförmige Kalotte in den Kern der Platte 40 eingefräst wird. Wenn die Profilschneiden 6, 6' die Stelle erreicht haben, in die die Nut 21 eingefräst werden soll, wird das Werkzeug in die mit "Fräsen" gekennzeichnete Richtung verschoben und die Nut 21 über die Profilschneiden 6, 6' in den Kern des Werkstücks 20 eingefräst. Ist die gewünschte Nuttiefe erreicht, unterbleibt ein weiterer radialer Vorschub des Werkzeugs und es wird in beide axiale Richtungen A nach oben und unten verschoben, sodass die T-förmige Vergrößerung 22 erzeugt wird. Anschließend wird das Werkzeug wieder in entgegengesetzter radialer Richtung aus dem Werkstück 20 herausgeführt und anschließend in axialer Richtung A nach oben von der Platte 40 entfernt. Dann kann über das Aufteilwerkzeug 50 das Werkstück 20 aufgeteilt werden.

Das Aufteilen des Werkstücks 20, 30 nach dem Einbringen der T-förmigen Nut 22 hat insbesondere bei kleinen Werkstücken den Vorteil, dass die Haltekräfte der Vakuumspannung ausreichend groß sind, um beim Einfräsen der T-förmigen Nut 22 ein Verschieben des Werkstücks auf der Maschinenauflage zu vermeiden.

Bei genügend großen Werkstücken kann das Aufteilen auch vor dem Einbringen der T-förmigen Nut 22 erfolgen. In diesem Fall können durch das Auftrennen keine Späne in die T-förmige Nut gelangen.

Durch die erfindungsgemäße Ausgestaltung des Werkzeugs können das Aufteilen und die Bearbeitung der Seitenkante des Werkstückes 20 in einer Aufspannung erfolgen. Gegenüber der bisherigen Verfahrensweise, bei der zunächst das Werkstück 20 aufgeteilt wurde und dann die Nut 21/22 in einem separaten Arbeitsgang auf einer weiteren Maschine eingefräst wird, ergibt sich an der großformatigen Holzwerkstoffplatte 40 ein Abfallstück, das dem Durchmesser des Werkzeugs abzüglich zweimal dem Durchmesser der Aufteilwerkzeuge 50 entspricht, was in Kauf genommen werden kann, weil der Zeitvorteil durch die Bearbeitung in einer Aufspannung und die damit einhergehende Steigerung der Produktivität die Materialkosten des Abfallstücks deutlich übersteigen.

### Bezugszeichenliste

- 1: Grundkörper
- 2: Schaft
- 4: Schneide
- 4': Schneide
- 4.1: Schneidplatte

- 5: Schneide
- 5': Schneide
- 6: Profilschneide
- 6': Profilschneide
- 6.1: Schneidkante

- 6.2: Schneidkante
- 6.3: Schneidkante
- 6.4: Schneidkante
- 6.5: Schneidkante
- 7: Durchbrechung

- 8: Kegel
- 10: Stirnseite
- 11: Schaftseite
- 20: Werkstück
- 21: Nut

- 22: T-förmige Nut
- 30: Werkstück
- 40: großformatige Platte
- 50: Aufteilwerkzeug

- α: Winkel

- I: zentrumsnaher Bereich
- II: umfangsnaher Bereich
- A: axiale Richtung
- D: Drehachse
- E_{R}: Radialebene

- R: radiale Richtung
- X₁: axialer Abstand
- X₂: axialer Abstand
- X₃: axialer Abstand
- Z: Zentrum

## Patentansprüche

1. Fräswerkzeug zur Bearbeitung von Werkstücken (20, 30), insbesondere aus Holz, Holzwerkstoffen, Kunststoffen oder Nichteisenmetallen sowie Leichtbau- und Verbundwerkstoffen aus diesen Werkstoffen, zumindest bestehend aus einem scheibenförmigen Grundkörper (1) mit einer Schaftseite (11) mit einer Ankopplung an eine Werkzeugmaschine und einer der Schaftseite (11) gegenüberliegenden Stirnseite (10), der radial außen mindestens eine im Querschnitt trapezförmige, sowohl in beide axialen Richtungen (A) als auch in einer radialen Richtung (R) schneidende Profilschneide (6, 6') aufweist, um damit eine bogenförmige T-Nut (22) zu erzeugen, und der um eine im Zentrum (Z) liegende Drehachse (D) antreibbar ist, **dadurch gekennzeichnet, dass** die Stirnseite (10) vom Zentrum (Z) bis zum äußeren Umfang in axialer Richtung (A) schneidend ausgebildet ist und eine Mehrzahl von Schneiden (4, 4'; 5, 5') aufweist, die in mindestens zwei Bereiche (I, II) aufgeteilt sind, wobei der erste Bereich (I) zentrumsnah und der zweite Bereich (II) umfangsnah angeordnet ist, und die mindestens eine Schneide (4, 4') im zentrumsnahen Bereich in einem Winkel (a) und die mindestens eine Schneide (5, 5') im umfangsnahen Bereich (II) planparallel zu einer Radialebene (E_{R}) des Grundkörpers (1) verlaufen.

2. Werkzeug nach Anspruch 1, **dadurch gekennzeichnet, dass** der axiale Abstand (X₁) der Profilschneide (6) vom Grundkörper (1) zur Stirnseite (10) größer ist als der axiale Abstand (X₂) zur Schaftseite (11).

3. Werkzeug nach Anspruch 1 oder 2, **dadurch gekennzeichnet, dass** der axiale Abstand (X₃) der Schneidkante (6.2) der Profilschneiden (6, 6') und der axiale Abstand (X₂) der umfangsnahen Schneiden (5, 5') zum Grundkörper (1) gleichgroß sind.

4. Werkzeug nach einem der vorstehenden Ansprüche, **dadurch gekennzeichnet, dass** der im Zentrum (Z) liegende Teil der im Winkel (a) angeordneten Schneiden (4, 4') in axialer Richtung (A) über die Stirnseite (10) weiter hervorsteht als die Profilschneide (6, 6').

5. Werkzeug nach einem der vorstehenden Ansprüche, **dadurch gekennzeichnet, dass** eine Mehrzahl zentrumnaher Schneiden (4, 4') und eine Mehrzahl umfangsnaher Schneiden (5, 5') vorgesehen ist.

6. Werkzeug nach einem der vorstehenden Ansprüche, **dadurch gekennzeichnet, dass** die im Winkel verlaufenden Schneiden (4, 4') einen stumpfen Winkel, insbesondere einen Winkel von 170° einschließen.

7. Werkzeug nach einem der vorstehenden Ansprüche, **dadurch gekennzeichnet, dass** vor den Schneiden (4, 4') im zentrumsnahen Bereich (I) im Grundkörper (1) Durchbrüche (7) vorgesehen sind.

8. Werkzeug nach einem der vorstehenden Ansprüche, **dadurch gekennzeichnet, dass** die Schneiden (4, 4') im zentrumsnahen Bereich (I) als Wechselmesser (4.1) ausgebildet sind.

9. Werkzeug nach einem der vorstehenden Ansprüche, **dadurch gekennzeichnet, dass** die Schneiden (4, 4') im zentrumsnahen Bereich (I) und die Schneiden (5, 5') im umfangsnahen Bereich (II) einen unterschiedlichen Härtegrad aufweisen.

## Claims

1. A milling tool for machining workpieces (20, 30), in particular made of wood, wood materials, plastics or non-ferrous metals as well as lightweight construction and composite materials made of these materials, at least comprising a disc-shaped base body (1) with a shaft side (11) with a coupling to a machine tool and an end face (10) opposite the shaft side (11), wherein said base body features, radially outwards, at least one profile cutting edge (6, 6') that is trapezoidal in cross-section, cutting both in both axial directions (A) and in a radial direction (R) in order to produce an arched T-slot (22), and said base body can be driven about a rotational axis (D) that lies in the centre (Z), **characterised in that** the end face (10) is designed to cut in the axial direction (A) from the centre (Z) to the outer circumference and comprises a plurality of cutting edges (4, 4'; 5, 5'), which are divided into at least two regions (I, II), wherein the first region (I) is arranged close to the centre and the second region (II) close to the circumference, and the at least one cutting edge (4, 4') in the region close to the centre extends at an angle (a) and the at least one cutting edge (5, 5') in the region close to the circumference extends plane-parallel to a radial plane (E_{R}) of the base body (1).

2. The tool according to claim 1, **characterised in that** the axial distance (X₁) of the profile cutting edge (6) from the base body (1) to the end face (10) is greater than the axial distance (X₂) to the shaft side (11).

3. The tool according to claim 1 or 2, **characterised in that** the axial distance (X₃) of the cutting edge (6.2) of the profile cutting edges (6, 6') and the axial distance (X₂) of the cutting edges (5, 5') in the region close to the circumference to the base body (1) are equal in size.

4. The tool according to one of the preceding claims, **characterised in that** the part of the cutting edges (4, 4') arranged at an angle (a) in the centre (Z) projects further beyond the end face (10) in the axial direction (A) than the profile cutting edge (6, 6').

5. The tool according to one of the preceding claims, **characterised in that** a plurality of cutting edges (4, 4') close to the centre and a plurality of cutting edges (5, 5') close to the circumference are provided.

6. The tool according to one of the preceding claims, **characterised in that** the cutting edges (4, 4') that extend at an angle form an obtuse angle, especially an angle of 170°.

7. The tool according to one of the preceding claims, **characterised in that** openings (7) are provided in the base body (1) in front of the cutting edges (4, 4') in the region close to the centre (I).

8. The tool according to one of the preceding claims, **characterised in that** the cutting edges (4, 4') in the region close to the centre (I) are designed as runners (4.1).

9. The tool according to one of the preceding claims, **characterised in that** the cutting edges (4, 4') in the region close to the centre (I) and the cutting edges (5, 5') in the region close to the circumference (II) have a different degree of hardness.

## Revendications

1. Outil de fraisage pour l'usinage de pièces à œuvrer (20, 30), en particulier en bois, en matériaux à base de bois, en matières plastiques ou en métaux non ferreux, ainsi qu'en matériaux de construction légers et en matériaux composites constitués de ces matériaux, constitué au moins d'un corps de base (1) en forme de disque avec un côté tige (11) pourvu d'un accouplement à une machine-outil et avec un côté frontal (10) opposé au côté tige (11), ledit corps présentant radialement à l'extérieur au moins un tranchant profilé (6, 6') de section transversale trapézoïdale qui coupe à la fois dans les deux directions axiales (A) et dans une direction radiale (R), afin de réaliser ainsi une rainure en forme de T (22) en forme d'arc, et pouvant être entraîné autour d'un axe de rotation (D) situé au centre (Z), **caractérisé en ce que** le côté frontal (10) est réalisé de manière à couper dans la direction radiale (R) depuis le centre (Z) jusqu'à la périphérie extérieure et présente une pluralité de tranchants (4, 4' ; 5, 5') qui sont subdivisés en au moins deux zones (I, II), la première zone (I) étant disposée à proximité du centre et la deuxième zone (II) étant disposée à proximité de la périphérie, et ledit au moins un tranchant (4, 4') dans la zone proche du centre s'étend sous un angle (a) et ledit au moins un tranchant (5, 5') dans la zone (II) proche de la périphérie s'étend dans un plan parallèle à un plan radial (E_{R}) du corps de base (1).

2. Outil selon la revendication 1, **caractérisé en ce que** la distance axiale (X₁) du tranchant profilé (6) depuis le corps de base (1) vers le côté frontal (10) est supérieure à la distance axiale (X₂) vers le côté tige (11).

3. Outil selon la revendication 1 ou 2, **caractérisé en ce que** la distance axiale (X₃) de l'arête de coupe (6.2) des tranchants profilés (6, 6') et la distance axiale (X₂) des tranchants (5, 5') proches de la périphérie par rapport au corps de base (1) sont de même taille.

4. Outil selon l'une des revendications précédentes, **caractérisé en ce que** la partie, située au centre (Z), des tranchants (4, 4') disposés sous l'angle (a) dépasse dans la direction axiale (A) au-delà du côté frontal (10) davantage que le tranchant profilé (6, 6').

5. Outil selon l'une des revendications précédentes, **caractérisé en ce qu'**il est prévu une pluralité de tranchants (4, 4') proches du centre et une pluralité de tranchants (5, 5') proches de la périphérie.

6. Outil selon l'une des revendications précédentes, **caractérisé en ce que** les tranchants (4, 4') s'étendant selon un angle forment un angle obtus, en particulier un angle de 170°.

7. Outil selon l'une des revendications précédentes, **caractérisé en ce que** des traversées (7) sont prévues dans le corps de base (1) an avant des tranchants (4, 4') dans la zone (I) proche du centre.

8. Outil selon l'une des revendications précédentes, **caractérisé en ce que** les tranchants (4, 4') dans la zone (I) proche du centre sont réalisés sous forme de lames interchangeables (4.1).

9. Outil selon l'une des revendications précédentes, **caractérisé en ce que** les tranchants (4, 4') dans la zone (I) proche du centre et les tranchants (5, 5') dans la zone (II) proche de la périphérie ont un degré de dureté différent.
